# EUROPÄISCHE PATENTSCHRIFT

(11) **EP 0 906 523 B1**
(45) Veröffentlichungstag und Bekanntmachung des Hinweises auf die Patenterteilung: **15.12.1999**
(21) Anmeldenummer: 97929102.8
(22) Anmeldetag: 13.06.1997
(51) Int. Cl.: F16F 9/02, F16F 9/36, F16F 9/34

(54) **PNEUMATISCHER BEWEGUNGSDÄMPFER**
PNEUMATIC MOVEMENT DAMPER
AMORTISSEUR PNEUMATIQUE DE MOUVEMENT

(30) Priorität: 21.06.1996 DE 29610915 U
(43) Veröffentlichungstag der Anmeldung: 07.04.1999
(73) Patentinhaber: Hörauf & Kohler Verwaltungs KG, 86199 Augsburg (DE)
(72) Erfinder: HOFMANN, Heinz, A., D-91757 Treuchtlingen (DE)
(74) Vertreter: Liebau, Gerhard (DE)
(86) Internationale Anmeldenummer: DE9701202
(87) Internationale Veröffentlichungsnummer: WO9749936

(56) Entgegenhaltungen:
- EP-A- 0 198 180
- DE-U- 29 518 171
- FR-A- 2 666 857
- US-A- 3 937 450
- US-A- 5 471 708

## Beschreibung

Die Erfindung betrifft einen pneumatischen Bewegungsdämpfer, mit einem einseitig geschlossenen Zylinder, mit einem in diesem verschiebbar gelagerten und mit einer Kolbenstange verbundenen Kolben, mit einer von dem Kolben getragenen Manschettendichtung und mit einem am Kolben vorgesehenen Drosselkanal, der die beiden von Kolben und Manschettendichtung getrennten Zylinderräume verbindet.

Ein pneumatischer Bewegungsdämpfer mit diesen Merkmalen ist aus der EP-A-0 198 180 bekannt. Derartige pneumatische Bewegungsdämpfer werden häufig zur Verlangsamung der Bewegung einer aufschwenkbaren Klappe, beispielsweise der Klappe eines Handschuhfaches eines Kraftfahrzeuges, verwendet. Derartige Klappen sind heutzutage meist recht schwer und so ausgestaltet, daß auf Ihnen auch ein Teil des Inhalts des Handschuhfaches liegt. Wenn die Verriegelung der Klappe gelöst wird, dann schwenkt die Klappe unter Schwerkrafteinwirkung in die Offen-Stellung. Damit die Klappe nicht plötzlich herunterklappt und auf die Beine des Passagiers fällt, soll bei der Aufschwenkbewegung der Klappe der pneumatische Bewegungsdämpfer eine Verlangsamung der Bewegung bewirken. Umgekehrt soll jedoch beim Schließen der Klappe der Bewegungsdämpfer die Schließbewegung möglichst wenig behindern.

Bei einem anderen, aus der DE-U1-296 00 438 bekannten Bewegungsdämpfer der oben genannten Art ist als Drosselkanal in dem Kolben eine axiale Bohrung vorgesehen. Beim Herausziehen des Kolbens aus dem Zylinder liegt die Maschettendichtung abdichtend an der Zylinderwandung an und die Luft soll allein durch diese Drosselbohrung strömen. Um eine ausreichende Dämpfungswirkung zu erzielen, darf jedoch die Drosselbohrung nur einen Durchmesser von ca. 0,1 mm aufweisen. Bei der Herstellung des Kolbens aus Kunststoffmaterial bereitet es Schwierigkeiten, eine derartig feine Bohrung zu erzeugen. Dies kann meist nur mit einem Laserstrahl erfolgen, wozu ein separater Arbeitsgang erforderlich ist, der die Herstellungskosten verteuert. Die feine Bohrung kann auch zu Fehlfunktionen oder sogar zu einem Ausfall des Bewegungsdämpfers führen. Es können sich nämlich vor der Bohrung oder auch in der Bohrung Schmutzpartikel absetzen, die die Bohrung teilweise oder ganz verstopfen. In ersterem Fall erfolgt dann die Öffnungsbewegung der Klappe zu langsam. In letzterem Fall kann die Klappe überhaupt nicht mehr heruntergeklappt werden. Beim Schließen der Klappe wird der Kolben in den Zylinder eingeschoben. Hierbei würde sich in dem zwischen dem Zylinderboden und dem Kolben befindlichen Zylinderraum ein Druckpolster aufbauen. Damit dies nicht geschieht, ist die Manschettendichtung elastisch ausgebildet, so daß er sich von der Zylinderwandung abheben kann und die Luft dann durch den so gebildeten Ringspalt hindurchtreten kann. Die Erfahrung hat jedoch gezeigt, daß derartige elastische Manschettendichtungen aus Kunststoff zu einer ratternden Bewegung führen, wenn auch der Zylinder aus Kunststoff ausgebildet ist.

Der Erfindung liegt daher die Aufgabe zugrunde, einen pneumatischen Bewegungsdämpfer der eingangs erwähnten Art zu schaffen, der einfach herstellbar ist und betriebssicher arbeitet.

Dies wird nach der Erfindung dadurch erreicht, daß der Kolben einen sich von der Kolbenstange weg erweiternden Kegelsitz und ein an den größten Durchmesser desselben angrenzendes Flanschteil aufweist, daß die Manschettendichtung eine dem Kegelsitz entsprechende kegelstumpfförmige Ausnehmung aufweist und zwischen dem Flanschteil und einem an der Kolbenstange mit axialem Abstand vom Flanschteil angeordneten Ringflansch axial begrenzt verschiebbar ist, daß in den der Manschettendichtung zugekehrten, normal zur Zylinderachse verlaufen Flächen von Flanschteil und Ringflansch radiale Nuten vorgesehen sind, von denen die im Flanschteil vorgesehene Nut einen kleineren Querschnitt aufweist als die im Ringflansch angeordnete Nut und erstere den Drosselkanal bildet, und daß zwischen Kegelsitz und Ausnehmung ein Durchlaßkanal vorgesehen ist.

Bei dem erfindungsgemäßen Bewegungsdämpfer kann sich die Manschettendichtung gegenüber dem Kolben begrenzt verschieben. Beim Herausziehen der Kolbenstange aus dem Zylinder legt sich die Stirnfläche an das Flanschteil abdichtend an und die durch den Durchlaßkanal zwischen Kegelsitz und Ausnehmung hindurchströmende Luft kann dann nur noch durch die radiale Nut im Flanschteil hindurchströmen. Da diese Nut einen verhältnismäßig geringen Querschnitt aufweist, tritt eine große Drosselwirkung und damit die gewünschte Dämpfung der Kolbenbewegung beim Herausziehen der Kolbenstange ein. Wird hingegen die Schubrichtung umgekehrt und die Kolbenstange in den Zylinder eingeschoben, dann wird durch die Bremswirkung zwischen Manschettendichtung und innerer Zylinderwand die Manschettendichtung zunächst festgehalten, bis der Ringflansch an der anderen Stirnseite der Manschettendichtung anliegt und diese mitnimmt. Während der Bewegungsumkehr kann sich der Kegelsitz leicht und reibungslos von der kegelstumpfförmigen Ausnehmung der Manschettendichtung lösen. Dies ist ein wesentlicher Vorteil des erfindungsgemäßen Bewegungsdämpfers, der auch zur Betriebssicherheit beiträgt. Sobald die Manschettendichtung am Ringflansch anliegt, kann die Luft praktisch ungehindert durch den zwischen Kegelsitz und Ausnehmung gebildeten Ringspalt und außerdem durch die radiale Nut - es sind zweckmäßig mehrere derartige radiale Nuten vorgesehen - im Ringflansch hindurchströmen. Da diese Nut bzw. diese Nuten einen beliebig großen Querschnitt aufweisen können, verursachen sie praktisch keine Drosselwirkung, so daß der Kolben und die Kolbenstange ungehindert in den Zylinder eingeschoben werden können. Zu diesem ungehinderten Einfahren der Kolbenstange trägt auch die Tatsache bei, daß beim Einfahren die kegelstumpfförmige Ausnehmung der Manschettendichtung vom Kegelsitz abgehoben ist. Hierdurch verliert die Manschettendichtung ihre radiale Abstützung nach innen, so daß sie beim Einfahren mit geringerer Spannung an die Zylinderwandung angedrückt wird und hierdurch die Reibung zwischen beiden Teilen erheblich reduziert wird. Die Verwendung einer radialen Nut im Flanschteil des Kolbens als Drosselkanal hat den Vorteil, daß sich diese Nut beim Spritzen des Kolbens aus Kunststoff leicht herstellen läßt und daußerdem besteht so gut wie keine Verstopfungsgefahr. Sollten einmal Staubpartikel in die Drosselnut gelangt sein, so können sich diese beim Einschieben des Kolbens in den Zylinder leicht wieder aus der Drosselnut lösen, denn beim Einschieben ist die Manschettendichtung von dem Flanschteil abgehoben und damit die Drosselnut zur Manschettendichtung hin offen. Durch die beim Einschieben entstehende Luftströmung werden Staubpartikel, die eventuell in die Drosselnut gelangt sind, wieder aus dieser herausgeblasen. Bei dem erfindungsgemäßen Bewegungsdämpfer wird die Luft zwischen der vom Flanschteil und dem Kegelsitz abgehobenen Manschettendichtung und den vorgenannten Teilen sowie die radialen Nuten im Ringflansch hindurchgeleitet. Da hier ausreichend große Querschnitte vorgesehen werden können, besteht keine Verstopfungsgefahr und außerdem ist es nicht erforderlich, daß sich die Dichtlippe der Manschettendichtung beim Einschieben des Kolbens von der Zylinderwandung abhebt. Man kann infolgedessen die Manschettendichtung und auch ihre Dichtlippe aus verhältnismäßig steifem Kunststoff, insbesondere solchem, in welchem Molybdän eingelagert ist, herstellen. Dies hat den Vorteil, daß Rattererscheinungen bei Verschiebung der Kolbenstange vermieden werden.

Vorteilhafte Ausgestaltungen der Erfindung sind in den Unteransprüchen gekennzeichnet.

Die Erfindung ist in folgendem, anhand eines in der Zeichnung dargestellten Ausführungsbeispieles näher erläutert. Es zeigen:
- Figur 1: eine Seitenansicht des Bewegungsdämpfers teilweise im Axialschnitt,
- Figur 2: eine Ansicht des Ringflansches gemäß der Linie II-II der Figur 1,
- Figur 3: eine Ansicht des Kolbens gemäß der Linie III-III der Figur 1.

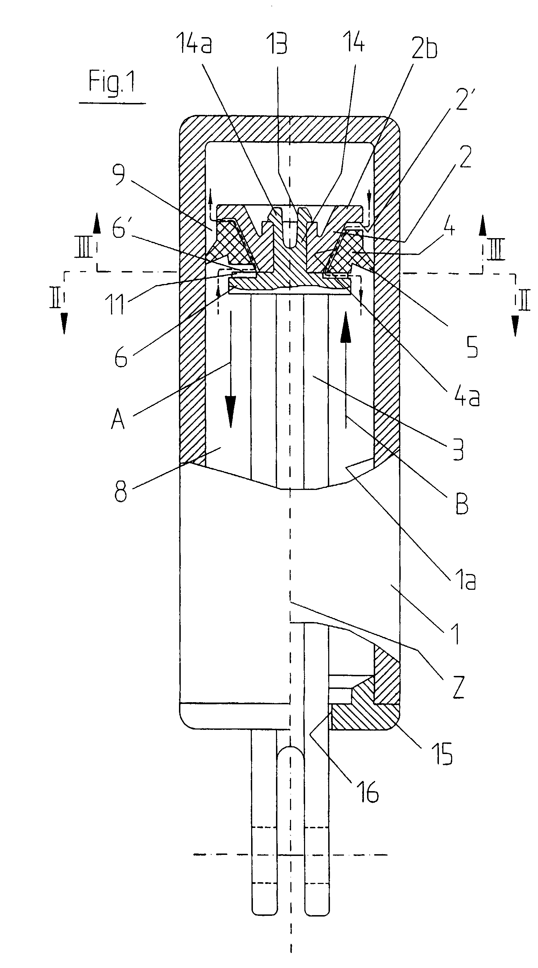

Der pneumatische Bewegungsdämpfer besteht zunächst aus einem Zylinder 1, der aus Kunststoff hergesteilt ist. In dem Zylinder 1 ist ein Kolben 2 verschiebbar gelagert, der mit der Kolbenstange 3 verbunden ist. Auch der Kolben 2 und die Kolbenstange 3 bestehen aus Kunststoff. Der Kolben 2 weist einen sich von der Kolbenstange 3 weg erweiternden Kegelsitz 2a und ein an den größten Durchmesser desselben angrenzendes Flanschteil 2b auf. Auf dem Kolben 2 ist eine Manschettendichtung 4 angeordnet, die eine dem Kegelsitz 2a entsprechende kegelstumpfförmige Ausnehmung 4a aufweist. Die Manschettendichtung 4 weist eine an der Zylinderwandung 1a anliegende Dichtlippe 5 auf. Die Manschettendichtung 4 ist ferner zwischen dem Flanschteil 2b und einem an der Kolbenstange 3 mit axialem Abstand vom Flanschteil 2b angeordneten Ringflansch 6 begrenzt verschiebbar. In Figur 1 ist die Manschettendichtung 4 in ihrer Stellung dargestellt, die sie beim Herausziehen der Kolbenstange 3 in Richtung A einnimmt, während in Figur 1, rechts, die Manschettendichtung 4 in einer Position gezeichnet ist, die sie beim Einschieben der Kolbenstange 3 in Richtung B einnimmt.

Das Flanschteil 2b weist in seiner der Manschettendichtung 4 zugekehrten, normal zur Zylidnerachse Z verlaufenden Fläche 2' eine radiale Nut 7 auf, die auch einen sich stufenweise verjüngenden Querschnitt haben kann. Wenn die Manschettendichtung 4 beim Herausziehen der Kolbenstange in Richtung A an dem Flanschteil 2b anliegt, dann bildet diese Nut 7 den einzigen Drosselkanal, durch den Luft von dem unteren Zylinderraum 8 in den oberen Zylinderraum 9 überströmen kann.

Ferner ist auch der Kegelsitz mit einer sich entlang einer seiner Mantellinien erstreckenden Nut 10 versehen. Diese Nut 10 kann jedoch einen größeren Querschnitt haben als die Nut 7 bzw. Teile derselben. Der Ringflansch 6 weist in seiner der Manschettendichtung 4 zugekehrten Fläche 6' vier Nuten 11 auf, deren Querschnitt zusammengerechnet wesentlich größer ist als der Querschnitt der Drosselnut 7.

Zweckmäßig sind Kolben 2 und Kolbenstange 3 zwei getrennte Teile, die miteinander verbindbar sind. Der Kolben 2 weist eine zentrale Bohrung 12 auf und ist auf einen mit axialen Schlitzen 13 versehenen Ansatz 14 der Kolbenstange aufgeschoben. Hierbei sind an dem freien Ende des Ansatzes 14 radial nach außen vorstehende Rastnasen 14a zur Halterung des Kolbens 2 vorgesehen.

Zur Herstellung von Bewegungsdämpfern mit unterschiedlicher Dämpfungswirkung ist es lediglich erforderlich, unterschiedliche Kolben 2 herzustellen, die sich voneinander nur durch den Querschnitt ihrer radialen Nuten 7 unterscheiden. Diese Kolben werden dann wahlweise durch Aufschieben auf den Ansatz 14 mit der Kolbenstange 3 verbunden.

Die Kolbenstange 3 und der Ringflansch 6 bestehen zweckmäßig aus einem Teil und sind ebenfalls aus Kunststoff gespritzt.

Ferner ist es zweckmäßig, den Zylinder 1 an seinem zweiten Enoe mit einem Deckel 15 zu versehen, der eine Öffnung 16 zum Durchtritt der Kolbenstange 3 aufweist. Durch diesen Deckel 15 wird das Eindringen von Staub und sonstigen Fremdkörpern in das Innere des Zylinders 1 weitgehend verhindert. Außerdem dient die Öffnung 16 im Deckel 15 zur Führung der Kolbenstange. Hierbei kann jedoch zwischen der Kolbenstange 3 und der Öffnung 16 ausreichend Spiel vorhanden sein, um eine seitliche Ausweichbewegung der Kolbenstange 3 gegenüber der Zylinderachse Z in vorbestimmten Grenzen zu ermöglichen.

Um Rattererscheinungen bei der Verschiebung der Kolbenstange 3 zu vermeiden, sollte die Manschettendichtung 4 aus genügend hartem Kunststoffmaterial, insbesondere Polyoxymethylen (= POM) mit eingelagertem Molybdän hergestellt sein.

Die Arbeitsweise des neuen Bewegungsdämpfers ist folgende:

Wird die Kolbenstange 3 in Richtung A aus dem Zylinder 1 herausgezogen, dann wird zunächst durch die Reibung zwischen Dichtlippe 5 und innerer Zylinderwand 1a die Manschettendichtung 4 festgehalten. Der Flanschteil 2b legt sich an die obere Stirnfläche der Manschettendichtung 4 abdichtend an. Beim weiteren Herausziehen der Kolbenstange 3 in Richtung A bildet sich im oberen Zylinderraum 9 ein Vakuum. Es kann jedoch noch Luft durch die Nut 10 im Kegelsitz 2a und durch die radiale Nut 7 im Flanschteil 2b aus dem unteren Zylinderraum 8 in den oberen Zylinderraum 9 überströmen. Hierbei wird die Luftstömung in der Nut 7 mit kleinem Querschnitt gedrosselt. Dies führt zu der gewünschten Bewegungsdämpfung beim Herausziehen der Kolbenstange 3 in Richtung A.

Wenn jedoch die Bewegungsrichtung umgekehrt wird und die Kolbenstange 3 in Richtung B in den Zylinder 1 eingeschoben wird, dann verschiebt sich zunächst der Kolben gegenüber der durch Reibung festgehaltenen Manschettendichtung 4 nach oben, wodurch der Kegelsitz 2a von der kegelstumpfförmigen Ausnehmung 4a abgehoben wird. Bei weiterer Verschiebung kommt der Ringflansch 6 an der unteren Stirnfläche der Manschettendichtung 4 zur Anlage. Die Luft kann nunmehr durch den zwischen dem Flanschteil 2b sowie dem Kegelsitz 2a und der Manschettendichtung 4 gebildeten Ringspalt und die radialen Nuten 11 in einem verhältnismäßig großen Querschnitt hindurchströmen, wie es in Figur 1, rechts, dargestellt ist, so daß eine ungehinderte Bewegung der Kolbenstange 3 in Richtung B sichergestellt ist.

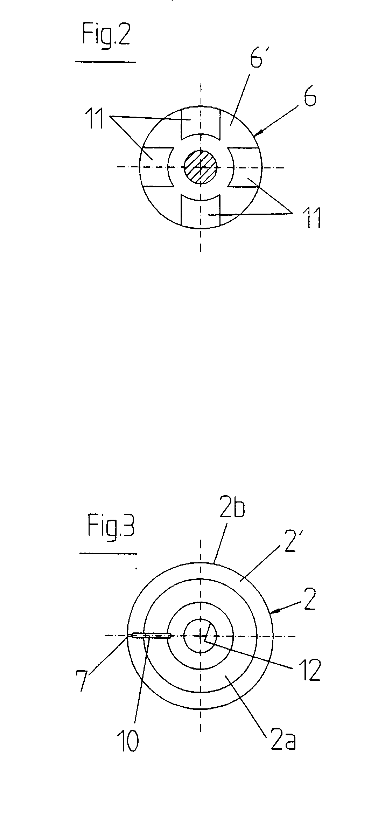

Zweckmäßig sind der Durchlaßkanal 10 und die radiale Nut 7 im Flanschteil 2b, wie es in Figur 3 dargestellt ist, auf einem gemeinsamen Axialschnitt des Kolbens 2 angeordnet und münden unmittelbar ineinander. Auf diese Weise wird die Anzahl der Kanäle kleingehalten und die Gesamtlänge der Verbindungskanäle zwischen den beiden Zylinderräumen ist kurz.

## Patentansprüche

1. Pneumatischer Bewegungsdämpfer, mit einem einseitig geschlossenen Zylinder (1), mit einem in diesem verschiebbar gelagerten und mit einer Kolbenstange (3) verbundenen Kolben (2), mit einer von dem Kolben getragenen Manschettendichtung (4) und mit einem am Kolben (2) vorgesehenen Drosselkanal (11), der die beiden von Kolben (2) und Manschettendichtung (4) getrennten Zylinderräume (8,9) verbindet, **dadurch gekennzeichnet,** daß der Kolben (2) einen sich von der Kolbenstange (3) weg erweiternden Hegelsitz (2a) und ein an dem größten Durchmesser desselben angrenzendes Flanschteil (2b) aufweist, daß die Manschettendichtung (4) eine dem kegelsitz (2a) entsprechende kegelstumpfförmige Ausnehmung (4a) aufweist und zwischen dem Flanschteil (2b) und einem an der Kolbenstange (3) mit axialem Abstand vom Flanschteil (2b) angeordneten Ringflansch (6) axial begrenzt verschiebbar ist, daß in den der Manschettendichtung (4) zugekehrten, normal zur Zylinderachse verlaufenden Flächen (2', 6') von Flanschteil (2b) und Ringflansch (6) radiale Nuten (7, 11) vorgesehen sind, von denen die im Flanschteil (2b) vorgesehene Nut (7) einen kleineren Querschnitt aufweist als die im Ringflansch (6) angeordnete Nut (11) und erstere den Drosselkanal bildet, und daß zwischen Kegelsitz (2a) und Ausnehmung (4a) ein Durchlaßkanal (10) vorgesehen ist.

2. Bewegungsdämpfer nach Anspruch 1, **dadurch gekenzeichnet,** daß der Durchlaßkanal durch eine im Kegelsitz (2a) angeordnete, vom Flanschteil (2b) zum Ringflansch (6) verlaufende Nut (10) gebildet wird.

3. Bewegungsdämpfer nach Anspruch 1, **dadurch gekennzeichnet,** daß in dem Ringflansch (6) mehrere radiale Nuten (11) vorgesehen sind.

4. Bewegungsdämpfer nach Anspruch 1, 2 oder 3, **dadurch gekennzeichnet,** daß Kolben (2) und Kolbenstange (3) zwei getrennte Teile sind und mit der Kolbenstange (3) wahlweise Kolben (2) mit im Querschnitt unterschiedlichen radialen Nuten (7) in den Flanschteilen (2b) verbindbar sind.

5. Bewegungsdämpfer nach Anspruch 4, **dadurch gekennzeichnet,** daß der Kolben (2) eine zentrale Bohrung (12) aufweist und auf einen mit axialen Schlitzen (13) versehenen Ansatz (14) der Kolbenstange (3) aufgeschoben ist, wobei am freien Ende des Ansatzes (14) radial nach außen vorstehende Rastnasen (14a) zur Halterung des Kolbens (2) vorgesehen sind.

6. Bewegungsdämpfer nach Anspruch 1, **dadurch gekennzeichnet**, daß Kolbenstange (3) und Ringflansch (6) einteilig sind und aus Kunststoff bestehen.

7. Bewegungsdämpfer nach Anspruch 1, **dadurch gekennzeichnet,** daß der Zylinder (1) an seinem zweiten Ende mit einem Deckel (15) versehen ist, der eine Öffnung (16) zum Durchtritt der Kolbenstange (3) aufweist.

8. Bewegungsdämpfer nach Anspruch 1**, dadurch gekennzeichnet,** daß die Manschettendichtung (4) aus Polyoxymethylen (POM) mit eingelagertem Molybdän besteht.

9. Bewegungsdämpfer nach Anspruch 2, **dadurch gekennzeichnet,** daß der Durchlaßkanal (10) und die radiale Nut (7) im Flanschteil (2b) auf einem gemeinsamen Axialschnitt des Kolbens (2) angeordnet sind und unmittelbar ineinander münden.

## Claims

1. Pneumatic movement damper with a cylinder (1) which is closed on one side, with a piston (2) which slides within the latter and which is connected to a piston rod (3), with a packing (4) mounted on the piston (2) and with a throttle passage (11) provided on the piston (2) for connecting the two cylinder spaces (8,9) separated by the piston (2) and the packing (4), **characterised in that** the piston (2) has a conical seat (2a) widening out from the piston rod (3) and a flange part (2b) adjacent to the largest diameter of said conical seat, in that the packing (4) has a truncated recess (4a) corresponding to the conical seat (2a) and can move within limits in the axial direction between the flange part (2b) and an annular flange (6) arranged on the piston rod (3) at an axial distance from the flange part (2b), in that radial grooves (7, 11) are provided in the surfaces (2', 6') of the flange part (2b) and the annular flange (6), said surfaces extending perpendicular to the axis of the cylinder and oriented towards the packing (4) and of which grooves the groove (7) provided in the flange part (2b) having a smaller cross-section than the groove (11) arranged in the annular flange (6) and the former forming the throttle passage and in that a flow passage (10) is provided between the conical seat (2a) and the recess (4a).

2. Movement damper according to Claim 1, **characterised in that** the flow passage is formed by a groove (10) arranged in the conical seat (2a) and extending from the flange part (2b) to the annular flange (6).

3. Movement damper according to Claim 1, **characterised in that** several radial grooves (11) are provided in the annular flange (6).

4. Movement damper according to Claim 1, 2 or 3, **characterised in that** the piston (2) and the piston rod (3) are two separate parts and may be connected to the piston rod (3) or alternatively the piston (2) with radial grooves (7) which have different cross-sections in the flange parts (2b).

5. Movement damper according to Claim 4, **characterised in that** the piston (2) has a central boring (12) and is pushed onto a projection (14) of the piston rod (3) provided with axial slots (13), catching noses (14a) being provided on the free end of the projection (14) and projecting radially outwards for mounting the piston (2).

6. Movement damper according to Claim 1, **characterised in that** the piston rod (3) and the annular flange (6) are made as one-piece and consist of plastic material.

7. Movement damper according to Claim 1, **characterised in that** the cylinder (1) is provided at its second end with a cover (15) which has an opening (16) for the piston rod (3) to pass through.

8. Movement damper according to Claim 1, **characterised in that** the packing (4) is made from polyoxymethylene (POM) incorporating molybdenum.

9. Movement damper according to Claim 2, **characterised in that** the flow passage (10) and the radial groove (7) in the flange part (2b) are arranged on a common axial section of the piston (2) and discharge directly into one another.

## Revendications

1. Amortisseur pneumatique de mouvement, comprenant un cylindre (1) fermé d'un côté, un piston (2) monté coulissant dans celui-ci et relié à une tige de piston (3), une garniture d'étanchéité en forme de manchette (4) portée par le piston et un canal d'étranglement (11) prévu sur le piston (2) et qui relie les deux chambres (8, 9) du cylindre séparées par le piston (2) et la manchette (4), caractérisé en ce que le piston (2) présente un siège conique (2a) s'élargissant dans le sens de l'éloignement de la tige de piston (3) et un rebord (2b) adjacent au plus grand diamètre de ce siège, que la manchette (4) présente un évidement tronconique (4a), correspondant au siège conique (2a), et est disposée axialement coulissante dans une mesure limitée entre le rebord (2b) et un collet annulaire (6) agencé à distance axiale du rebord (2b) sur la tige de piston (3), que des rainures radiales (7, 11) sont prévues dans les faces (2', 6'), dirigées vers la manchette (4) et normales à l'axe du cylindre, du rebord (2b) et du collet annulaire (6), dont la rainure (7) prévue dans le rebord (2b) possède une plus petite section droite que la rainure (11) ménagée dans le collet annulaire (6) et forme le canal d'étranglement, et qu'un canal de passage (10) est prévu entre le siège conique (2a) et l'évidement (4a).

2. Amortisseur de mouvement selon la revendication 1, caractérisé en ce que le canal de passage est formé par une rainure (10) ménagée dans le siège conique (2a) et s'étendant du rebord (2b) jusqu'au collet annulaire (6).

3. Amortisseur de mouvement selon la revendication 1, caractérisé en ce que plusieurs rainures radiales (11) sont prévues dans le collet annulaire (6).

4. Amortisseur de mouvement selon la revendication 1, 2 ou 3, caractérisé en ce que le piston (2) et la tige de piston (3) sont deux pièces séparées et des pistons (2) présentant des rainures radiales (7) de sections différentes dans les rebords (2b), peuvent être reliés au choix à la tige de piston (3).

5. Amortisseur de mouvement selon la revendication 4, caractérisé en ce que le piston (2) comporte un perçage central (12) et est enfilé sur un embout (14), pourvu de fentes axiales (13), de la tige de piston (3), des crochets d'arrêt (14a), faisant radialement saillie vers l'extérieur, étant prévus sur l'extrémité libre de l'embout (14) pour le maintien en place du piston (2).

6. Amortisseur de mouvement selon la revendication 1, caractérisé en ce que la tige de piston (3) et le collet annulaire (6) sont d'un seul tenant et en matière plastique.

7. Amortisseur de mouvement selon la revendication 1, caractérisé en ce que le cylindre (1) est pourvu, à sa seconde extrémité, d'un couvercle (15) présentant une ouverture (16) pour la traversée de la tige de piston (3).

8. Amortisseur de mouvement selon la revendication 1, caractérisé en ce que la manchette (4) est en polyoxyméthylène (POM) dans lequel est incorporé du molybdène.

9. Amortisseur de mouvement selon la revendication 2, caractérisé en ce que le canal de passage (10) et la rainure radiale (7) du rebord (2b) sont agencés dans un plan de coupe axiale commun du piston (2) et débouchent directement l'un dans l'autre.
